(19) Europäisches Patentamt
European Patent Office
Office européen des brevets

(11) **EP 2 963 412 B1**

(12) **EUROPEAN PATENT SPECIFICATION**

(45) Date of publication and mention
of the grant of the patent:
**02.09.2020 Bulletin 2020/36**

(51) Int Cl.:
*G01N 11/10* *(2006.01)* *G01N 11/00* *(2006.01)*
*G01N 11/14* *(2006.01)*

(21) Application number: **13876529.2**

(22) Date of filing: **28.02.2013**

(86) International application number:
**PCT/JP2013/055518**

(87) International publication number:
**WO 2014/132412 (04.09.2014 Gazette 2014/36)**

(54) **METHOD FOR FINDING SHEAR RATE OF FLUID, AND PROGRAM AND DEVICE FOR SAME**

VERFAHREN ZUM ERMITTELN DER SCHERGESCHWINDIGKEIT EINER FLÜSSIGKEIT SOWIE PROGRAMM UND VORRICHTUNG DAFÜR

PROCÉDÉ DE DÉTERMINATION DE LA VITESSE DE CISAILLEMENT D'UN FLUIDE, ET PROGRAMME ET DISPOSITIF ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.01.2016 Bulletin 2016/01**

(73) Proprietor: **A & D Company, Limited**
**Toshima-ku**
**Tokyo 170-0013 (JP)**

(72) Inventors:
• **IZUMO Naoto**
**Kitamoto-shi**
**Saitama 364-8585 (JP)**
• **KANNO Masahiro**
**Kitamoto-shi**
**Saitama 364-8585 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A2- 0 884 578** **JP-A- 2005 009 862**
**JP-A- 2008 533 477** **JP-A- 2011 069 754**
**US-A- 3 903 732** **US-A- 4 729 237**
**US-A1- 2003 084 708** **US-A1- 2003 192 366**
**US-A1- 2005 132 784** **US-A1- 2007 056 358**
**US-B1- 6 378 357**

• **NAOTO IZUMO: 'Shinhoshiki Rheometer ni yori Erareru Kakushu Ekitai no Nensei <Shindoshiki Rheometer RV-10000>' KEISOKU GIJUTSU vol. 41, no. 3, 05 February 2013, pages 33 - 37, XP008180893**

**Description**

Technical Field

The present invention relates to a method of obtaining a shear rate regarding physical properties evaluation of a fluid, particularly, relates to a calculating method of the shear rate of the fluid and a program and a device for the method.

Background Art

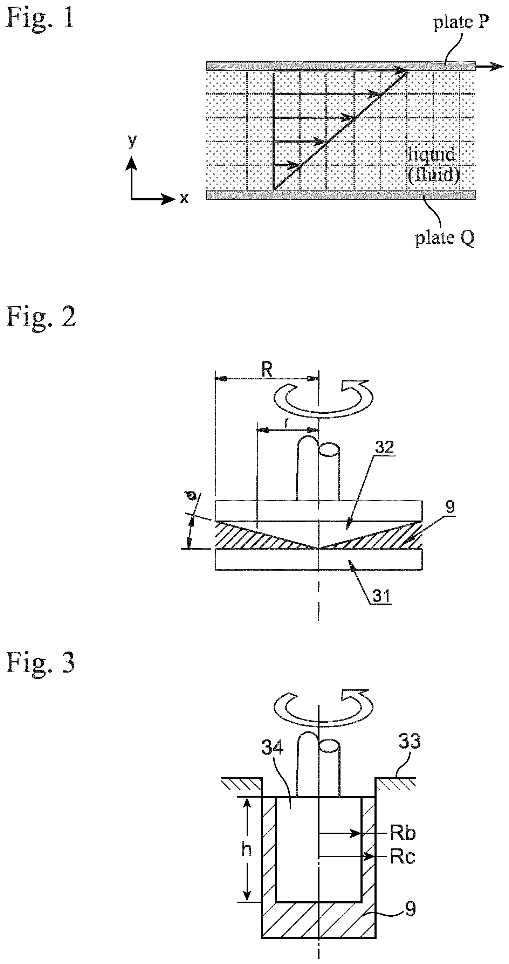

It is known that viscosity "η" which is an important factor for evaluating physical properties of a fluid is represented by the formula (1) using a shear rate "D" which is a velocity gradient obtained in an orthogonal coordinates of a fluid space wherein a plate P and a plate Q are arranged in parallel in x direction, the plate P is fixed, and the plate Q is moved in a constant speed in the x direction, and using a shear stress "S" which is a friction per unit area to act on a plane in parallel direction to the flow direction between the plates P and Q generated from the difference of the velocities, as shown in Figure 1. The formula (1) means the viscosity η of the fluid is obtained by the ratio between the shear stress S and the shear rate D occurring in the fluid.

$$\eta = S/D \quad \dots (1)$$

Here, particularly, it is essential, for a non Newtonian fluid of which viscosity η is changed in accordance with the change of the shear rate D, to measure the shear rate together with the measurement of the viscosity for the design of the physical properties of the fluid, because its behavior is changed depending on the change of the shear rate.

Meanwhile, as the devices evaluating the physical properties of the fluid, capillary type, falling body type, rotational type, and vibration type viscometers have been used.

The capillary type measures the viscosity by measuring a length of time during which the sample liquid flows through a constant certain flow path. The falling body type measures the viscosity by measuring a plunge time of a metal ball in the sample liquid. Therefore, both of them cannot obtain the shear rate because they measure indirectly the viscosity from the time.

Next, the vibration type cannot obtain the shear rate exerted on the fluid as a constant value with respect to the time change because its vibrator is reciprocated in the sample liquid. Therefore the types have been recognized as methods which cannot determine the shear rate (refer to the Patent Literatures 1 and 2 for a tuning fork vibration type, refer to the non-Patent Literature 1 for a rotational vibration type).

Next, the rotational type calculates the viscosity by measuring a torque necessary for keeping a rotor in a constant rotating number in the sample liquid and determines the shear rate from viewpoint that the rotating number of the rotor is directly proportional to the shear rate.

Specifically, in a cone plate rotational type viscometer, as shown in Figure 2, when a cone rotor 32 (the rotor) dunked in a sample liquid 9 is rotated at a rotating number "N" [rpm] in the state of keeping a plate 31 calm and if the radius of the rotor 32 is defined as "r", the shear rate D occurring in the sample liquid 9 is represented by formula (2) at any radius r, the shear rate D is irrelevant to the r and can be calculated from the rotating number N and the cone angle "φ" at any point of the cone surface (refer to the non-Patent Literature 2).

$$D = (2\pi Nr/60)(1/r\varphi) = (2\pi N/60)(1/\varphi) \quad \dots (2)$$

In a coaxial double cylinder rotational type viscometer, as shown in Figure 3, when an inner cylinder 34 (the rotor) dunked in a sample liquid 9 is rotated at a rotating number N [rpm] in the state of keeping an outer cylinder 33 calm and if the radius of the outer cylinder 33 is defined as "Rc", the radius of the inner cylinder 34 is defined as "Rb", and its height is defined as "h", the shear rate D occurring in the sample liquid 9 is represented by formula (3), the shear rate D can be calculated from the rotating number N and the radiuses Rb and Rc (refer to the non-Patent Literature 2).

$$D = 0.2094N/\{1-(Rb/Rc)^2\} \quad \dots (3)$$

Thus, the rotational types have been recognized as methods which can determine the shear rate because they can obtain the shear rate from the rotating number N and the shapes of the rotor φ or Rb and Rc.

Patent literature 3 describes a method of obtaining a shear rate and a tuning fork having the features as defined within the preamble of claim 1 or 2.

Citation List

Patent Literature

Patent Literature 1: JP-A-H05-149861

Patent Literature 2: JP-A-2005-9862

Patent literature 3 (US 2005/132784)

Non Patent Literature

Non Patent Literature 1: JIS Z8803 (2011)
Non Patent Literature 2: "glossary of rheology" in website of TOKI SANGYO CO., LTD. (http://www.tokisangyo.co.jp/pdf/paper/rheology_words.pdf)

Summary of Invention

Technical Problem

However, although the rotational type viscometers have been recognized as methods which can determine the shear rate, as mentioned the above, the shear rate is just obtained hypothetically by the geometric shape of the viscometer's device and the rotating number of the rotor. Therefore, there has been a problem that the ideal value reflected by the real behavior of the fluid is not provided.
The present invention is made in view of the problems of the conventional technique described the above, and an object thereof is to provide a new method to obtain the shear rate of the fluid, and to distribute the elucidation making the physical properties of the fluid more realistic by supplying a program and a device for the method.

Solution to Problem

In order to achieve the above described object, the present invention discloses a method of obtaining a shear rate occurring in a liquid sample for a tuning fork vibration type viscometer, as defined in claim 1.
The present invention further discloses a tuning fork vibration type viscometer, as defined in claim 2.
The present invention further discloses a program as defined in claim 3.

Advantageous Effect of Invention

The invention, for the viscometers of the tuning fork vibration type, which can provide a new method to obtain the shear rate of the fluid from the measurement value, and which can distribute the elucidation making the physical properties of the fluid more realistic without use of the geometric shape of the device and with more reflection of the real behavior of the fluid by providing the program and the device for the tuning fork vibration type viscometer.

Brief Description of Drawings

Fig.1 is a schematic diagram to derive the definitional formula of viscosity.
Fig.2 is a schematic view of a measuring part of the cone plate rotational type viscometer, which is not part of the present invention.
Fig.3 is a schematic view of a measuring part of the coaxial double cylinder rotational type viscometer, which is not part of the present invention.
Fig.4 is a configuration of the tuning fork vibration type viscometer of the embodiment.

Fig.5 is a block diagram of a driving and controlling system of the tuning fork vibration type viscometer.

Fig.6 is a flowchart to measure the shear rate by the tuning fork vibration type viscometer of the present invention.

Fig.7 is a graph showing a relation of shear rates and shear stresses, when a Newtonian fluid is measured by the above mentioned viscometer.

Fig.8 is a graph showing a relation of shear rates and shear stresses, when a non Newtonian fluid is measured by the above mentioned viscometer.

Fig.9 is a graph showing a relation of shear rates and viscosities, when a plurality of Newtonian fluids are measured by the above mentioned viscometer.

Fig.10 is a schematic view of a measuring part of the rotational vibration type viscometer, which is not part of the present invention.

Fig.11 is a flowchart to measure the shear rate which is common to the rotational type viscometer and the rotational vibration type viscometer of the present invention, which is not part of the present invention.

Description of Embodiments

Next, suitable embodiments of the present invention will be described.

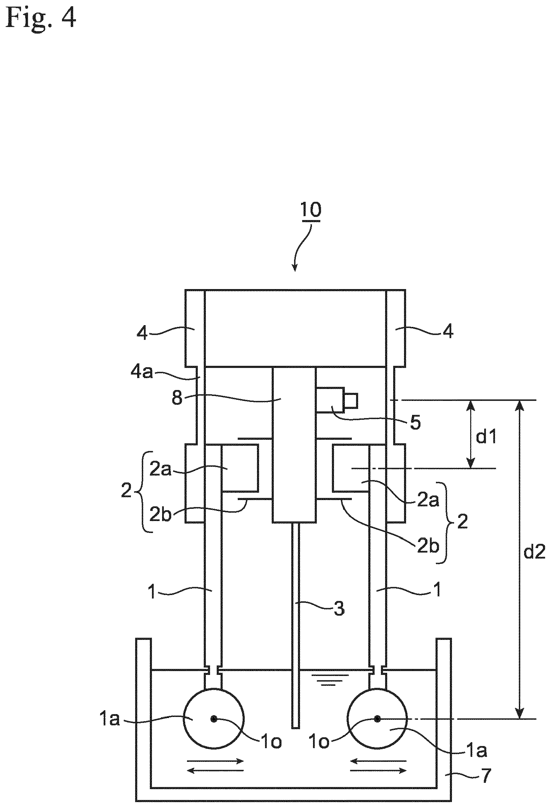

Fig.4 is a configuration of the tuning fork vibration type viscometer, and particularly, is a configuration of a drive mechanism part 10 in a main body of the viscometer. The configuration of the main body of the viscometer and the description of the drive mechanism part 10 are described in the Patent Literature 2.

Reference signs 1,1 in the drive mechanism part 10 are a pair of vibrators which are dunked in the sample liquid 9, each of which is made of a thin plate of a ceramic or a metallic member, etc, and of which a leading end is provided with a rounded limb portion. The limb portion is a wet part 1a contacted with the sample liquid 9. Central axes in a thickness direction of the pair of vibrators 1,1 are arranged so as to be positioned on the same plane in the sample liquid 9.

Reference sign 7 is a container which is filled with the sample liquid 9, and Reference sign 3 is a temperature sensor. Reference signs 4,4 are plate springs which are fixed to the vibrators 1,1 at the leading ends thereof. Reference sign 8 is a center support member to which the plate spring 4,4 are fixed and which is configured to dunk the vibrators 1, 1 in the sample liquid at a constant depth.

Reference sign 2b is an electromagnetic coil, Reference sign 2a is a ferrite magnet, and by a moving magnet type electromagnetic drive 2 which is made of the electromagnetic coil 2b and the ferrite magnet 2a, the vibrators 1, 1 which fixed on the leading end of the plate springs 4,4 are vibrated so as *to be set* a predetermined amplitude value. Reference sign 5 is a noncontact type displacement sensor for detecting eddy current losses which measures an amplitude value of the vibrators 1,1.

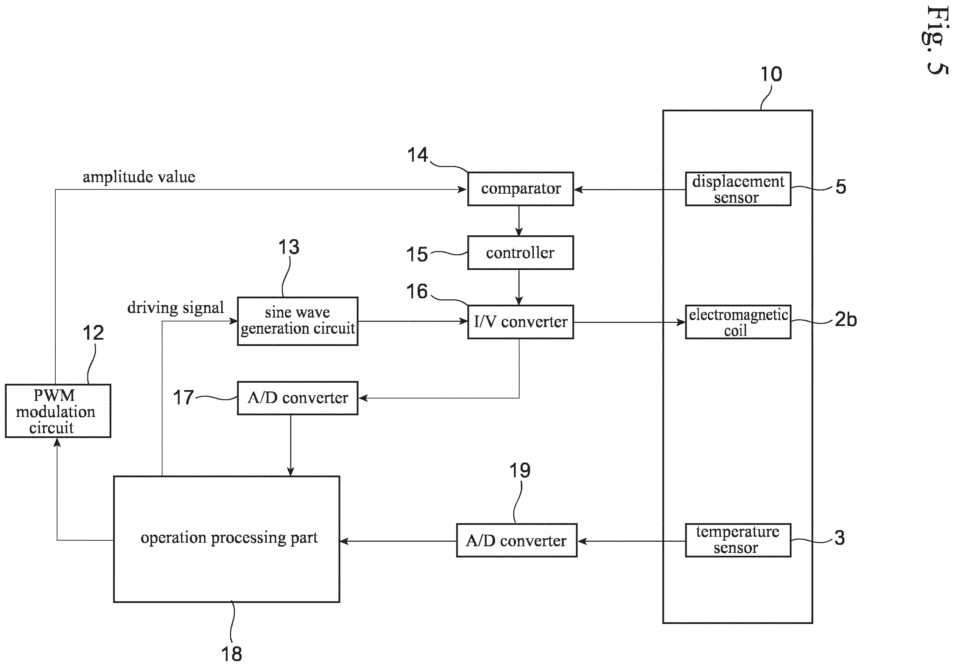

Next, Fig.5 is a block diagram of a driving and controlling system of the tuning fork vibration type viscometer.

Reference sign 12 is a PWM modulation circuit, Reference sign 13 is a sine wave generation circuit, Reference sign 14 is a comparator, Reference sign 15 is a controller, Reference sign 16 is an I/V converter, Reference signs 17 and 19 are A/D converters, and Reference sign 18 is an operation processing part.

The vibrators 1,1 dunked in the sample liquid 9 receive a driving signal from the operation processing part 18 so as to be vibrated in an predetermined amplitude value, then a driving current generated via the sine wave generation circuit 13 is energized to the electromagnetic coil 2b of the electromagnetic drive 2 and exerted on the plate springs 4,4. In this manner, the vibrators 1,1 are vibrated in a reverse phase and resonated. The amplitude value of the vibrators 1,1 is detected by the displacement sensor 5, the signal of the detected amplitude value is compared with the predetermined amplitude value in the comparator 14, and a signal is outputted from the controller 15 for vibrating the vibrators 1, 1 at the predetermined amplitude value, and thereby, a feedback control is executed therein. After the vibrators 1,1 become to be vibrated in the predetermined amplitude value, a driving current "I" energized to the electromagnetic coil 2b is detected. Then, the driving current I is inputted to the operation processing part 18 via the I/V converter 16 and the A/D converter 17, the viscosity of the sample liquid 9 is calculated. The process of calculating the viscosity is described in the Patent Literature 1. Also, an input signal from the temperature sensor 3 is inputted to the operation processing part 18 via the A/D converter 19.

The PWM modulation circuit 12 is connected between the operation processing part 18 and the comparator 14, and since the PWM modulation circuit 12 performs pulse width modulation to the amplitude value inputted to the comparator 14 by receiving orders from the operation processing part 18, the predetermined amplitude value is changed arbitrarily, the amplitude of the vibrators 1, 1 is changed in the measurement, and the shear rate generated in the sample liquid 9 is changed.

A memory 21, a display 22, and key switches 23, etc, (each of them is not illustrated) are connected to the operation processing part 18, an user can set up terms of measurement by using the key switches 23. The terms of measurement include, for example, a measuring time, setting of the change of the amplitude (inputting an upper limit and a lower limit of the amplitude, the determination of an amount of change of the amplitude per time, and whether the amplitude is raised, fallen or reciprocated), etc. These details are described in WO2012/074654.

Next, a new method of obtaining the shear rate of the sample liquid 9 by using the above described tuning fork vibration type viscometer will be described in detail. The operation processing part 18 performs the calculations in the following steps.

(A step of calculating the shear stress)

In the tuning fork vibration type viscometer, an energy necessary for reciprocation motion is measured as a necessary power for moving the vibrator 1 in the sample liquid 9 (a torque) when the vibrator 1 is reciprocated in accordance with a sine wave in the sample liquid 9. Thus, the shear stress S generated between the sample liquid 9 and the vibrator 1 can be calculated, (refer to a formula (4)), by dividing a driving force "F" on a center 1o of the wet part 1a of the vibrator 1 by a liquid contact area "A" of the vibrator 1 (an area of the wet part 1a). The liquid contact area A is a known value obtained by the configuration of the viscometer's device.

$$S=F/A \quad \ldots(4)$$

The driving force F which is necessary for the step of calculating the shear stress can be calculated from a step of calculating the driving force.

(A step of calculating the driving force)

The driving force F on the center of the wet part of the vibrator 1o is calculated by dividing a power "F1" generated in the electromagnetic drive 2 by a ratio (a lever ratio) "$\alpha$" which is between a distance "d1" to a vertical center of the electromagnetic drive 2 and a distance "d2" to the center of the wet area 1o of the vibrator on a basis of a vertical center of the thinnest part 4a of the plate spring 4 acting as a fulcrum of the vibrator 1 (refer to the formula (5)). The lever ratio $\alpha$ is a known value obtained by the configuration of the viscometer.

$$F=F1/\alpha \quad \ldots(5)$$

The power F1 generated in the electromagnetic drive 2 can be calculated from a product of a density of magnetic flux "B" of the coil 22, the driving current "I" flowing in the coil 22, and a coil length "L" of the coil 22 (refer to the formula (6)). The density of magnetic flux B and the coil length L are known quantities by the configuration of the viscometer.

$$F1=BIL \quad \ldots(6)$$

Here, if the driving current I is treated as an effective value, the driving force F on the center of the wet part of the vibrator 1o is calculated by the formula (7) by using a first step of calculating the power F1 generated in the electromagnetic drive 2 in the formula (6) and a second step of substituting the value of F1 for the formula (5).

$$F=BIL/\alpha \quad \ldots(7)$$

(A step of calculating the viscosity)

A viscosity $\eta$ of the sample liquid 9 is obtained by the above mentioned measurement. If the viscosity $\eta$ of the sample liquid 9 is the known quantity beforehand, it is allowed to be inputted from the key switches 23 or to be read as a prerecorded value from the memory 21.

In this manner, the viscosity $\eta$ of the sample liquid 9 becomes a known quantity, the shear rate D generated in the sample liquid 9 can be calculated from the formula (8) by using the formula (1), the formula (4) and the formula (7).

$$D=BIL/\alpha\eta A \quad \ldots(8)$$

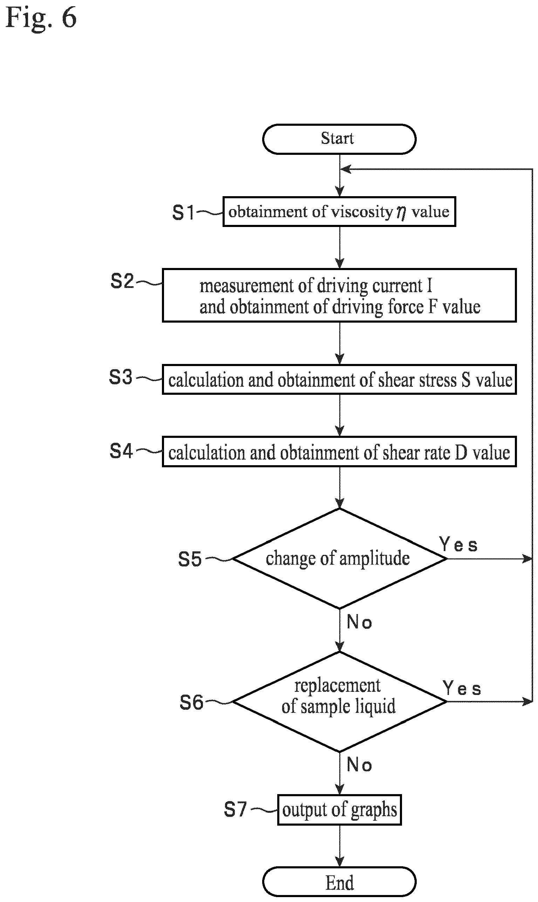

Fig.6 is a flowchart to measure the shear rate by the tuning fork vibration type viscometer in accordance with the present invention.

When the measurement is started, the process proceeds to step S1 in which the value of viscosity η of the sample liquid 9 is obtained from the step of calculating the viscosity. In case of the real measurement, it is preferable the viscosity η is determined at the moment when the measurement value is judged to become stable after the measurement stating. In case of the non-measurement, the inputted value or the read-out value is obtained from the memory 21. Next, the process proceeds to step S2, in which the driving current I is measured, and the driving force F of the center of the wet part 1o from the step of calculating the driving force is measured for obtaining the value. Next, the process proceeds to step S3, in which the shear stress S is calculated from the step of calculating the shear stress for obtaining the value. Next, the process proceeds to step S4, in which the shear rate D is calculated from the ratio between the shear stress S and the viscosity η which is obtained from the above for obtaining the value. Next, the process proceeds to step S5, in which the value of the predetermined amplitude of the vibrator 1 is changed, and backs to the step S1. If the predetermined amplitude becomes the predetermined final value, the process proceeds to step S6, the sample liquid 9 is replaced with another sample liquid, and the process backs to the step S1. If it is no need for replacing the sample liquid, the process proceeds to step S7, graphs of the rheogram, etc, are outputted, and the measurement is stopped.

The graphs which are outputted in the step S7 can be prepared by using any plotted values such as, in its vertical axis and horizontal axis, the shear rate D of the sample liquid 9, the shear stress S, the viscosity η, the driving force F, the amplitude value of the vibrator 1, and the temperature measured by the temperature sensor 3 of the sample liquid 9, which are arbitrarily specified. Also, all outputted data of plural sample liquids can be brought altogether.

Next, the invention of the present application will be explained in more detail by using following embodiments, but the invention is not limited thereto. By the way, the liquid contact area A of the tuning fork vibration type viscometer was 0.000304 [mm], the lever ratio α was 3.81, the magnetic flux of the coil 22 B was 0.308 [web/m$^2$], and the coil length L was 4 [m], in the following measurement.

(Embodiment 1)

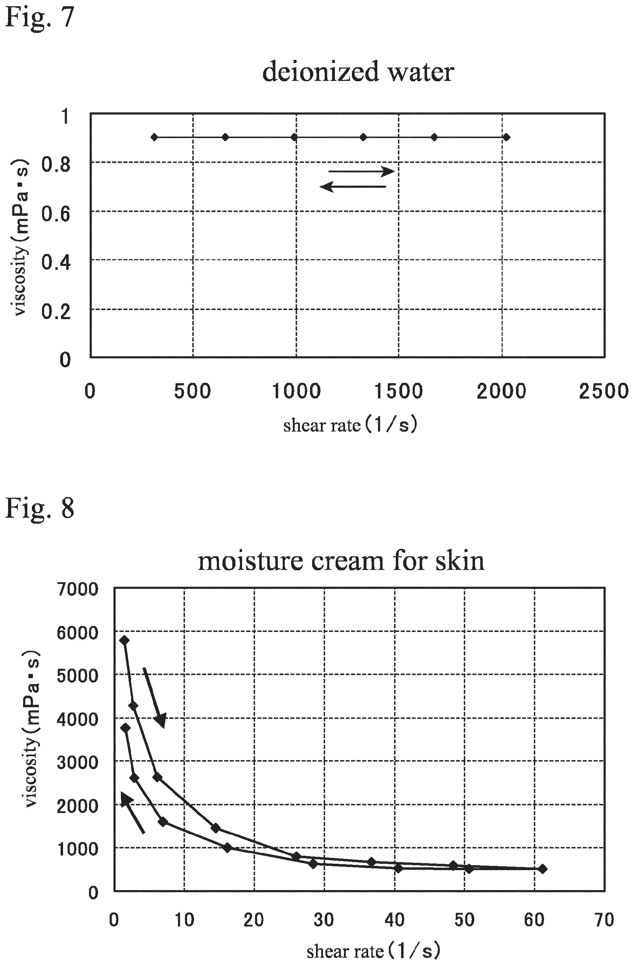

45 ml a deionized water which was a Newtonian fluid (under the constant temperature 25 [degrees centigrade] condition) was used as a sample liquid. The terms of the measurement were followings, the measurement time was 11 minutes, the lower limit value of the amplitude was 0.2mm, the upper limit value was 1.2mm, the amount of change of the amplitude per time was 0.2mm/minute, and the amplitude was reciprocated after the raising and the falling. Also, the viscosity of the deionized water (25 [degrees centigrade]) was the known quantity (in accordance with JIS Z8803), so that the measurement was done by inputting the known quantity. The results of the shear rate obtained by the measurement are shown in Figure 7. The horizontal axis is the shear rate [1/s] and the vertical axis is the viscosity [mPa*s].

(Embodiment 2)

45 ml a moisture cream for skin which was a non Newtonian fluid (under the constant temperature 25 [degrees centigrade] condition) was used as a sample liquid. The terms of the measurement were followings, the measurement time was 15 minutes, the lower limit value of the amplitude was 0.07mm, the upper limit value was 1.2mm, the amount change of the amplitude were 0.07, 0.1, 0.2, 0.4, 0.6, 0.8, 1.0, 1.2mm, each of them was changed per 1 minute. The amplitude was reciprocated after the raising and the falling. The values of viscosity were obtained from the start of the measurement in every one minute after the respective amplitudes were changed. The results of the shear rate are shown in Figure 8. The horizontal axis is the shear rate [1/s] and the vertical axis is the viscosity [mPa*s].

(Embodiment 3)

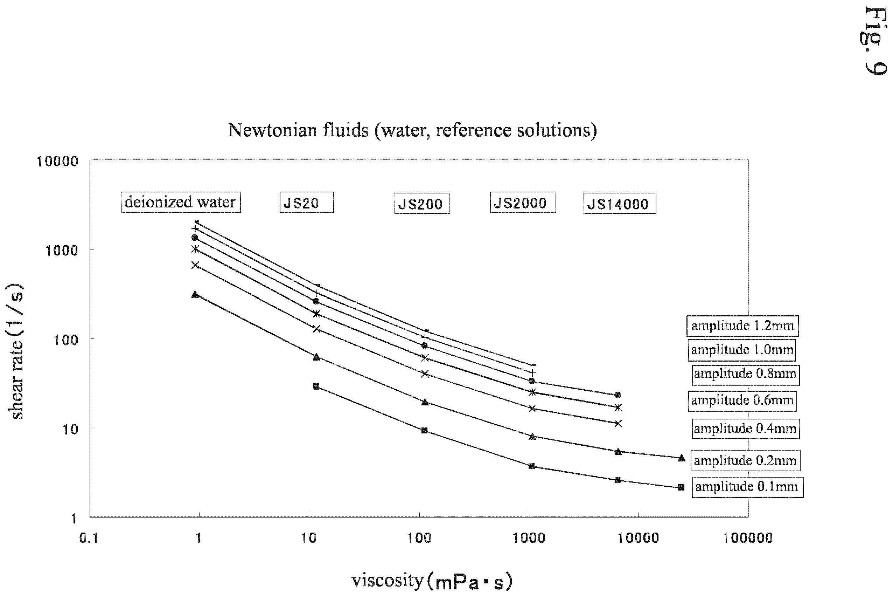

45 ml a deionized water and 45ml reference solutions JS 20, JS200, JS2000, and JS14000 all of which were Newtonian fluids (each of them under the constant temperature 25 [degrees centigrade] condition) were used as sample liquids. The terms of the measurement were the same as those of the embodiment 1. Also, since each of the viscosities is the known quantity (in accordance with JIS Z8803), the measurements were done by inputting the known quantities. The results of the shear rates are shown in Figure 9 by drawing lines of the respective liquids . The horizontal axis is the viscosity [mPa*s] and the vertical axis is shear rate [1/s].

From the above, in the method of obtaining the shear rate by the present invention, since the shear rate is calculated by measured values, that is, the driving force F (the driving current I) and the viscosity η which may include a known value, the shear rate can be obtained without the influence of the geometric shape of the device and with reflection of the real behavior of the fluid, and the method can contribute to the elucidation of the physical properties of the fluid which are more close to an actual situation.

Next, a method of obtaining the shear rate by a rotational type viscometer will be described.

In the exemplary cone plate rotational type viscometer, as shown in Figure 2, the sample liquid 9 which is filled between the plate 31 and the cone rotor 32 with the same center axis is rotated and flows in a laminar flow by the cone rotor 32 acting as a rotor at rotating number N [rpm], the torque "τ" exerted on the plate 31 is detected for calculating the viscosity. The calculating process of the viscosity is described in the Non Patent Literature 1. Then, since the measured torque τ is the same value as the shear stress S which is generated in the sample liquid 9, the value of the shear stress S can be obtained by measuring the torque τ.

In the exemplary coaxial double cylinder rotational type viscometer, as shown in Figure 3, the sample liquid 9 which is filled between the outer cylinder 33 and the inner cylinder 34 with the same center axis is rotated and flows in a laminar flow by the inner cylinder 34 as the rotor at rotating number N [rpm], the torque τ exerted on the cylinder of the outer cylinder 33 is detected for calculating the viscosity. The detail of the configuration of the device and the calculating process of the viscosity is described in the Non Patent Literature 1. Similarly, since the measured torque τ is the same value as the shear stress S which is generated in the sample liquid 9, the value of the shear stress S can be obtained by measuring the torque τ.

Thus, when the viscosity η of the sample liquid 9 is obtained by the measurement described in the above (the step of calculating the viscosity) and when the value of the shear stress S (the value of the torque τ) is obtained (the step of calculating the shear stress), the shear rate D generated in the sample liquid 9 can be obtained by the ratio between the measured torque τ and the known quantity viscosity η, from the formula (1) wherein it is regarded S=τ(refer to the formula (9)). $D = \tau/\eta$ ... (9)

Also, when the viscometer is the type which is equipped the plate 31 and the outer cylinder 33 as the rotor, it is needless to say that the shear rate D can be obtained from the formula (9) by measuring the torque τ exerted on the other side element.

Next, a new method of obtaining the shear rate by a rotational vibration type viscometer will be described in detail.

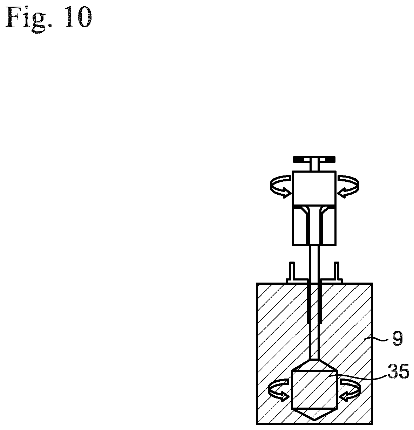

In the exemplary rotational vibration type viscometer, as shown in Figure 10, a cylinder-shaped-vibrator 35 is dunked and resonated in a rotating direction in the sample liquid 9, the torque τ necessary for keeping the cylinder-shaped-vibrator 35 in a constant amplitude is measured, and the viscosity is calculated. The detail of the configuration of the device and the calculating process of the viscosity is described in the Non Patent Literature 1.

Thus, similarly to the rotational type viscometer described above, when the viscosity η of the sample liquid 9 is obtained or is inputted in case it is the known quantity (the step of calculating the viscosity) and when the value of the shear stress S (the value of the torque τ) is obtained (the step of calculating the shear stress), the shear rate D generated in the sample liquid 9 can be obtained by using the formula (9).

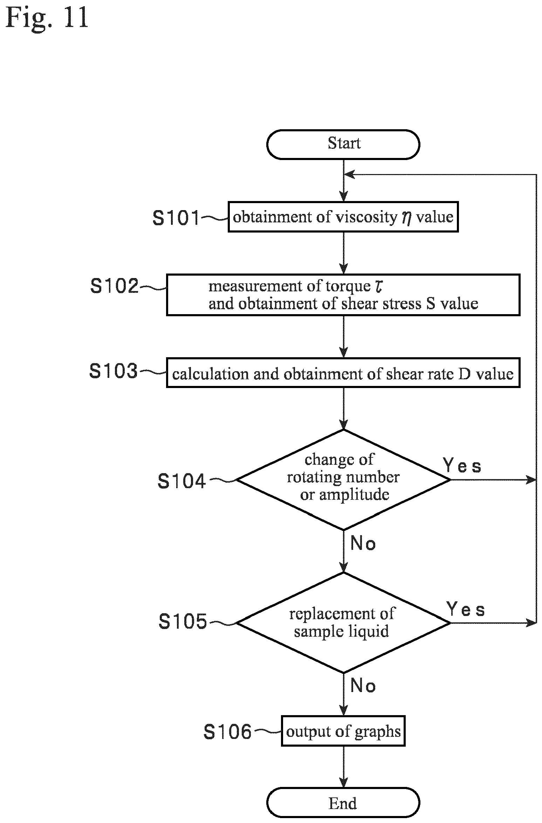

Fig.11 is a exemplary flowchart showing a method to measure the shear rate which is common to the rotational type viscometer and the rotational vibration type viscometer in accordance with the present invention.

When the measurement is started, the process proceeds to step S101, it measures the viscosity η of the sample liquid 9 and obtains the value from the step of calculating the viscosity. Next, the process proceeds to step S102, it measures the torque τ and obtains the value defined as the shear stress S from the step of calculating the shear stress. Next, the process proceeds to step S103, it calculates the shear rate D from the ratio between the measured shear stress S and the measured viscosity and obtains the values. Next, the process proceeds to step S104, it changes the rotating number in the rotational type viscometer or changes the amplitude in the rotational vibration type viscometer, and backs to the step S101. If it is no need for changing the rotating number or the amplitude, the process proceeds to step S105, the sample liquid 9 is replaced to another sample liquid, and backs to the step S101. If it is no need for replacing the sample liquid, the process proceeds to step S106, it outputs graphs of the rheogram, etc, and stops the measurement.

Arbitrary values selected from, for example, the shear rate D of the sample liquid 9, the shear stress S and the viscosity η are assigned to its vertical and horizontal axes for outputting the graph in the step S106. Also, the graphs can be outputted by using all data of a plurality of the sample liquids altogether.

From the above, the method of the present invention can be applied to other than the turning fork vibration type viscometer, and be applied not only to the rotational vibration type viscometer but also to the rotational type viscometer in accordance with the same thinking. Each of the rotational type viscometer and the rotational vibration type viscometer has the device configuration in which the cone rotor 32 or the inner cylinder 34 or the cylinder-shaped-vibrator 35 rotates, and these viscometers measure the torque τ necessary for keeping their rotation. Therefore, the shear rate D can be obtained by the ratio between the measured torque τ and the known quantity viscosity η from the formula (9).

Thus, the present invention can provide the method to obtain the shear rate without use of the geometric shape of the device and with reflection of the real behavior of the fluid in both of the rotational type viscometer and the rotational vibration type viscometer.

Reference Signs List

1... vibrator, 1a... wet part, 1o... center of wet part, 2... electromagnetic drive, 2a... ferrite magnet, 2b... electromagnetic coil, 3... temperature sensor, 4...plate spring, 4a... thinnest part of plate spring, 5... displacement sensor, 7... container, 9... sample liquid, 10... drive mechanism part, 32... cone rotor as a rotor, 34... cylinder as a rotor, 35... cylinder shaped vibrator.

**Claims**

1. A method of obtaining a shear rate occurring in a liquid sample for a tuning fork vibration type viscometer, in which a pair of vibrators (1) are dunked in the sample liquid (9) and vibrated by an electromagnetic drive (2) equipped with a coil (2b), a driving current is applied to the coil so as to set an amplitude of the vibrators within a predetermined amplitude value, and a viscosity of the sample liquid is calculated by measuring the driving current, such pair of vibrators each comprises a thin plate of which a leading end is provided with a rounded limb portion (1a), such limb portions constituting a wet part to be contacted with the sample liquid and the other leading end are fixed to plate springs (4), such plate springs having a thinnest part (4a) acting as a fulcrum of the vibrator, the method comprising:

   a step of calculating the viscosity of the sample liquid by a measurement described above or input;
   a step of calculating a driving force on a center (1o) of the wet part of the vibrator from the driving current; and
   a step of calculating a shear stress exerted on the sample liquid from the driving force and a liquid contact area of the vibrator,
   wherein the shear rate is calculated from a ratio between the shear stress and the viscosity,
   **characterized in that**,
   the calculation of the driving force on the center of the wet part of the vibrator in the step of calculating the driving force comprises:

      a first step of calculating a power generated in the electromagnetic drive from a product of a density of magnetic flux, a driving current and a length of the coil of the electromagnetic drive; and
      a second step of dividing the power generated in the electromagnetic drive by a ratio between the distance (d1) to the center of the electromagnetic drive from the center of the thinnest part of the plate spring and the distance (d2) to the center of the wet area of the vibrator from the center of the thinnest part of the plate spring.

2. A tuning fork vibration type viscometer, comprising a pair of vibrators (1) which are dunked in a sample liquid (9) and vibrated by an electromagnetic drive (2) equipped with a coil (2b), where a driving current is applied to the coil so as to set an amplitude of the vibrators within a predetermined amplitude value, and a viscosity of the sample liquid is calculated by measuring the driving current, such pair of vibrators each comprises a thin plate of which a leading end is provided with a rounded limb portion (1a), such limb portions constituting a wet part to be contacted with the sample liquid and the other leading end are fixed to plate springs (4), such plate springs having a thinnest part (4a) acting as a fulcrum of the vibrator the tuning fork vibration type viscometer further comprising:

   a means of calculating the viscosity of the sample liquid by a measurement described above or input;
   a means of calculating a driving force on a center (1o) of the wet part of the vibrator from the driving current; and
   a means of calculating a shear stress exerted on the sample liquid from the driving force and a liquid contact area of the vibrator,
   wherein the shear rate is calculated from a ratio between the shear stress and the viscosity,
   **characterized in that**,
   the calculation of the driving force on the center of the wet part of the vibrator in the means of calculating the driving force is conducted by calculating a power generated in the electromagnetic drive from a product of a density of magnetic flux, a driving current and a length of the coil of the electromagnetic drive, and dividing the power generated in the electromagnetic drive by a ratio between the distance (d1) to the center of the electromagnetic drive from the center of the thinnest part of the plate spring and the distance (d2) to the center of the wet area of the vibrator from the center of the thinnest part of the plate spring.

3. A program of calculating the shear rate in which the method of obtaining the shear rate according to claim 1 is executably programmed in a computer.

**Patentansprüche**

1. Verfahren zum Ermitteln einer in einer Flüssigkeitsprobe auftretenden Schergeschwindigkeit für ein stimmgabelartiges Vibrationsviskosimeter, bei dem ein Paar von Vibrationsgeräten (1) in die Probenflüssigkeit (9) eingetaucht und von einem mit einer Spule (2b) versehenen elektromagnetischen Antrieb (2) in Vibration versetzt werden, wobei ein Antriebsstrom an die Spule angelegt wird, so dass eine Amplitude der Vibrationsgeräte innerhalb eines vorbestimmten Amplitudenwerts festgelegt wird, und eine Viskosität der Probenflüssigkeit durch Messen des Antriebsstroms berechnet wird, wobei solch ein Paar von Vibrationsgeräten jeweils eine dünne Platte aufweist, deren führendes Ende mit einem abgerundeten Schenkelabschnitt (1a) versehen ist, wobei solche Schenkelabschnitte einen Nassteil bilden, der mit der Probenflüssigkeit in Kontakt gebracht werden soll, und wobei das andere führende Ende an Tellerfedern (4) fixiert ist, wobei solche Tellerfedern einen dünnsten Teil (4a) aufweisen, der als ein Drehpunkt des Vibrationsgeräts dient, wobei das Verfahren umfasst:

   einen Schritt des Berechnens des Viskosität des Probenflüssigkeit durch eine oben beschriebene Messung oder Eingabe;
   einen Schritt des Berechnen einer Antriebskraft auf einer Mitte (1o) des Nassteils des Vibrationsgeräts aus dem Antriebsstrom; und
   einen Schritt des Berechnens einer auf die Probenflüssigkeit ausgeübten Scherbelastung aus dem Antriebsstrom und eines Flüssigkeitskontaktbereichs des Vibrationsgeräts,
   wobei die Schergeschwindigkeit aus einem Verhältnis zwischen der Scherbelastung und der Viskosität berechnet wird,
   **dadurch gekennzeichnet, dass**
   die Berechnung der Antriebskraft auf der Mitte des Nassteils des Vibrationsgeräts in dem Schritt des Berechnens der Antriebskraft umfasst:

      einen ersten Schritt des Berechnens einer in dem elektromagnetischen Antrieb erzeugten Antriebskraft aus einem Produkt einer Dichte des magnetischen Flusses, eines Antriebsstroms und einer Länge der Spule des elektromagnetischen Antriebs; und
      einen zweiten Schritt des Dividierens der in dem elektromagnetischen Antrieb erzeugten Antriebskraft durch ein Verhältnis zwischen dem Abstand (d1) zur Mitte des elektromagnetischen Antriebs von der Mitte des dünnsten Teils der Tellerfeder und dem Abstand (d2) zur Mitte des Nassbereichs des Vibrationsgeräts von der Mitte des dünnsten Teils der Tellerfeder.

2. Stimmgabelartiges Vibrationsviskosimeter mit einem Paar von Vibrationsgeräten (1), die in eine Probenflüssigkeit (9) eingetaucht und von einem mit einer Spule (2b) versehenen elektromagnetischen Antrieb (2) in Vibration versetzt werden, wobei ein Antriebsstrom an die Spule angelegt wird, so dass eine Amplitude der Vibrationsgeräte innerhalb eines vorbestimmten Amplitudenwerts festgelegt wird, und eine Viskosität der Probenflüssigkeit durch Messen des Antriebsstroms berechnet wird,
   wobei solch ein Paar von Vibrationsgeräten jeweils eine dünne Platte aufweist, deren führendes Ende mit einem abgerundeten Schenkelabschnitt (1a) versehen ist, wobei solche Schenkelabschnitte einen Nassteil bilden, der mit der Probenflüssigkeit in Kontakt gebracht werden soll, und wobei das andere führende Ende an Tellerfedern (4) fixiert ist, wobei solche Tellerfedern einen dünnsten Teil (4a) aufweisen, der als ein Drehpunkt des Vibrationsgeräts dient,
   wobei das stimmgabelartige Vibrationsviskosimeter aufweist:

   eine Einrichtung zum Berechnen der Viskosität der Probenflüssigkeit durch eine oben beschrieben Messung oder Eingabe;
   eine Einrichtung zum Berechnen einer Antriebskraft auf einer Mitte (1o) des Nassteils des Vibrationsgeräts aus dem Antriebsstrom; und
   eine Einrichtung zum Berechnen einer auf die Probenflüssigkeit ausgeübten Scherbelastung aus dem Antriebsstrom und eines Flüssigkeitskontaktbereichs des Vibrationsgeräts,
   wobei die Schergeschwindigkeit aus einem Verhältnis zwischen der Scherbelastung und der Viskosität berechnet wird,
   **dadurch gekennzeichnet, dass**
   die Berechnung der Antriebskraft auf der Mitte des Nassteils des Vibrationsgeräts in der Einrichtung zum Berechnen der Antriebskraft durchgeführt wird, indem eine in dem elektromagnetischen Antrieb erzeugte Antriebskraft aus einem Produkt einer Dichte des magnetischen Flusses, eines Antriebsstroms und einer Länge der Spule des elektromagnetischen Antriebs berechnet wird und die in dem elektromagnetischen Antrieb erzeugte Antriebskraft durch ein Verhältnis zwischen dem Abstand (d1) zur Mitte des elektromagnetischen Antriebs von der Mitte des dünnsten Teils der Tellerfeder und dem Abstand (d2) zur Mitte des Nassbereichs des Vibrationsgeräts von der Mitte des dünnsten Teils der Tellerfeder dividiert wird.

**3.** Programm zum Berechnen der Schergeschwindigkeit, bei dem das Verfahren zum Ermitteln der Schergeschwindigkeit nach Anspruch 1 in einem Computer ausführbar programmiert ist.

**Revendications**

**1.** Procédé d'obtention d'une vitesse de cisaillement survenant dans un échantillon liquide pour un viscosimètre de type à vibration par diapason, dans lequel une paire de vibrateurs (1) est plongée dans le liquide d'échantillon (9) et mis en vibration par un entraînement électromagnétique (2) équipé d'une bobine (2b), un courant d'entraînement est appliqué à la bobine de façon à établir une amplitude des vibrateurs dans une valeur d'amplitude prédéterminée, et une viscosité du liquide d'échantillon est calculée par mesure du courant d'entraînement, cette paire de vibrateurs comprenant individuellement une plaque mince dont une extrémité d'attaque est munie d'une portion de branche arrondie (la), ces portions de branche constituant une partie humide à mettre en contact avec le liquide d'échantillon et l'autre extrémité d'attaque sont fixées à des ressorts à lame (4), ces ressorts à lame ayant une partie la plus mince (4a) servant de point d'appui du vibrateur, le procédé comprenant :

une étape consistant à calculer la viscosité du liquide d'échantillon par une mesure décrite ci-dessus ou une entrée ;
une étape consistant à calculer une force d'entraînement sur un centre (1o) de la partie humide du vibrateur à partir du courant d'entraînement ; et
une étape consistant à calculer une contrainte de cisaillement exercée sur le liquide d'échantillon à partir de la force d'entraînement et d'une zone de contact de liquide du vibrateur,
dans lequel la vitesse de cisaillement est calculée à partir d'un rapport entre la contrainte de cisaillement et la viscosité,
**caractérisé en ce que**,
le calcul de la force d'entraînement sur le centre de la partie humide du vibrateur à l'étape consistant à calculer la force d'entraînement comprend :

une première étape consistant à calculer une puissance générée dans l'entraînement électromagnétique à partir d'un produit d'une densité de flux magnétique, d'un courant d'entraînement et d'une longueur de la bobine de l'entraînement électromagnétique ; et
une seconde étape consistant à diviser la puissance générée dans l'entraînement électromagnétique par un rapport entre la distance (d1) du centre de l'entraînement électromagnétique au centre de la partie la plus mince du ressort à lame et la distance (d2) du centre de la zone humide du vibrateur au centre de la partie la plus mince du ressort à lame.

**2.** Viscosimètre de type à vibration par diapason, comprenant une paire de vibrateurs (1) plongés dans un liquide d'échantillon (9) et mis en vibration par un entraînement électromagnétique (2) équipé d'une bobine (2b), où un courant d'entraînement est appliqué à la bobine de façon à établir une amplitude des vibrateurs dans une valeur d'amplitude prédéterminée, et une viscosité du liquide d'échantillon est calculée par mesure du courant d'entraînement,
cette paire de vibrateurs comprend individuellement une plaque mince dont une extrémité d'attaque est munie d'une portion de branche arrondie (la), ces portions de branche constituant une partie humide à mettre en contact avec le liquide d'échantillon et l'autre extrémité d'attaque sont fixées à des ressorts à lame (4), ces ressorts à lame ayant une partie la plus mince (4a) servant de point d'appui du vibrateur,
le viscosimètre de type à vibration par diapason comprenant en outre :

un moyen de calcul de la viscosité du liquide d'échantillon par une mesure décrite ci-dessus ou une entrée ;
un moyen de calcul d'une force d'entraînement sur un centre (1o) de la partie humide du vibrateur à partir du courant d'entraînement ; et
un moyen de calcul d'une contrainte de cisaillement exercée sur le liquide d'échantillon à partir de la force d'entraînement et d'une zone de contact de liquide du vibrateur,
dans lequel la vitesse de cisaillement est calculée à partir d'un rapport entre la contrainte de cisaillement et la viscosité,

**caractérisé en ce que**,
le calcul de la force d'entraînement sur le centre de la partie humide du vibrateur dans le moyen de calcul de la force d'entraînement est conduit par calcul d'une puissance générée dans l'entraînement électromagnétique à partir d'un produit d'une densité de flux magnétique, d'un courant d'entraînement et d'une longueur de la bobine de l'entraînement électromagnétique, et division de la puissance générée dans l'entraînement électromagnétique par un rapport entre la distance (d1) du centre de l'entraînement électromagnétique au centre de la partie la plus mince du ressort à lame et la distance (d2) du centre de la zone humide du vibrateur au centre de la partie la plus mince du ressort à lame.

3. Programme de calcul de la vitesse de cisaillement, dans lequel le procédé d'obtention de la vitesse de cisaillement selon la revendication 1 est programmé de manière exécutable dans un ordinateur.

Fig. 1

plate P

y

x

liquid
(fluid)

plate Q

Fig. 2

R

r

∅

32

9

31

Fig. 3

34

33

Rb

Rc

h

9

i

Fig. 4

Fig. 5

## Fig. 6

```
                    ┌─────────────┐
                    │    Start    │
                    └─────────────┘
                           │
         S1 ──┤ obtainment of viscosity η value │
                           │
         S2 ──┤ measurement of driving current I
                and obtainment of driving force F value │
                           │
         S3 ──┤ calculation and obtainment of shear stress S value │
                           │
         S4 ──┤ calculation and obtainment of shear rate D value │
                           │
         S5 ──< change of amplitude >──── Yes ──►
                           │
                          No
                           │
         S6 ──< replacement
                of sample liquid >──── Yes ──►
                           │
                          No
                           │
         S7 ──┤ output of graphs │
                           │
                    ┌─────────────┐
                    │     End     │
                    └─────────────┘
```

Fig. 7

deionized water

Fig. 8

moisture cream for skin

Fig. 9

Fig. 10

## Fig. 11

```
                    ┌─────────────┐
                    │    Start     │
                    └──────┬───────┘
                           │           ◄───────────────┐
                           ▼                           │
       S101 ─┤ obtainment of viscosity η value │       │
                           │                           │
                           ▼                           │
       S102 ─┤ measurement of torque τ                │
              │ and obtainment of shear stress S value │
                           │                           │
                           ▼                           │
       S103 ─┤ calculation and obtainment of shear rate D value │
                           │                           │
                           ▼                           │
                    ╱ change of ╲          Yes         │
       S104 ─┤    rotating number  ├──────────────────►┤
                    ╲ or amplitude ╱                    │
                           │ No                         │
                           ▼                           │
                    ╱ replacement of ╲     Yes          │
       S105 ─┤     sample liquid   ├──────────────────►┘
                    ╲              ╱
                           │ No
                           ▼
       S106 ─┤ output of graphs │
                           │
                           ▼
                    ┌─────────────┐
                    │     End      │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP A A
- JP H05149861 B
- JP 2005009862 A
- US 2005132784 A
- WO 2012074654 A

**Non-patent literature cited in the description**

- *JIS Z8803,* 2011
- glossary of rheology. TOKI SANGYO CO., LTD,